Europäisches Patentamt

European Patent Office

Office européen des brevets

(11) Veröffentlichungsnummer: **0 180 894**

**A1**

(12) **EUROPÄISCHE PATENTANMELDUNG**

(21) Anmeldenummer: 85113709.1

(22) Anmeldetag: 28.10.85

(51) Int. Cl.⁴: **H01G 1/08** , H01G 1/02 , H01G 4/38

(30) Priorität: 07.11.84 DE 3440672

(43) Veröffentlichungstag der Anmeldung:
14.05.86 Patentblatt 86/20

(84) Benannte Vertragsstaaten:
DE FR GB IT

(71) Anmelder: **Siemens Aktiengesellschaft
Berlin und München Wittelsbacherplatz 2
D-8000 München 2(DE)**

(72) Erfinder: **Behn, Reinhard, Dipl.-Phys.
Frasdorferstrasse 6d
D-8000 München 90(DE)**
Erfinder: **Solar, Josef, Dipl.-Ing.
Albert-Schweitzer-Strasse 51
D-7920 Heidenheim(DE)**

(54) **Elektrischer Wickelkondensator.**

㊷ Ein elektrischer Wickelkondensator ist derart in ein metallisches Flachgehäuse (8) eingebaut, daß die flachen Seiten des Gehäuses (8) parallele Ebenen zu den stirnseitigen Schoopflächen (6, 7) des Kondensatorwickels (5) bilden. Als elektrische Zuleitung zu den stirnseitigen Schoopschichten (6, 7) dienen Metallplatten (9,10) die mit einer Kunststoffschraube (17) klemmend an den Schoopschichten (6, 7) befestigt sind. Zwischen den Metallplatten (9, 10) und der Wand des Gehäuses (8) befindet sich eine Isolierschicht (11). Die Metallplatten (9,10) sind über laschenartige Fortsätze (12, 13) mit äußeren Anschlußelementen (14, 15) verbunden.

**FIG 2**

EP 0 180 894 A1

## Elektrischer Wickelkondensator

Die Erfindung betrifft einen elektrischen Wickelkondensator, der gegebenenfalls aus mehreren miteinander verschalteten Einzelwickeln besteht, wobei Elektroden zu entgegengesetzten Stirnseiten geführt und dort mit Schoopschichten kontaktiert sind, und der in ein metallisches Gehäuse eingebaut ist.

Diese Kondensatoren werden üblicherweise aus Einzelwickeln in koaxialer Anordnung aufgebaut und in ein zylindrisches Gehäuse eingebaut. Dabei sind die Wickelkondensatoren in ihren Abmessungen so dimmensioniert, daß der Wickeldurchmesser kleiner oder in der Größe der Wickellänge ist. Dieser Aufbau ergibt sich aus wirtschaftlichen Gesichtspunkten, da breite Folien ein schnelles Wickeln ermöglichen und außerdem die zu kontaktierende Stirnfläche (Schoopschicht) klein ist.

Infolge der Weiterentwicklung von Leistungshalbleitern kommen immer höhere Frequenzen bei Umrichtern zur Anwendung, wodurch auch immer höhere wärmetechnische Anforderungen an die für diese Schaltungen notwendigen Kommutierungskondensatoren gestellt werden. Bei den bisher üblichen Kondensatoraufbauten können deshalb unzulässig hohe Erwärmungen des Kondensators auftreten, die auf einen ungünstigen Wärmeübergang zwischen Kondensatorwickel und Gehäuse zurückzuführen sind. Aufgabe der Erfindung ist es, einen Kondensator der eingangs genannten Art anzugeben, der einen besseren Wärmeübergang zwischen Wickel und Gehäuse aufweist.

Diese Aufgabe wird erfindungsgemäß dadurch gelöst, daß der Kondensator in ein rechteckförmiges Flachgehäuse eingebaut ist, und daß die flachen Seiten des Gehäuses parallele Ebenen zu den stirnseitigen Schoopflächen bilden.

Vorzugsweise ist die Breite eines Kondensatorwickels kleiner als der Wickeldurchmesser.

Eine Weiterbildung der Erfindung sieht vor, daß der Kondensator als elektrische Zuleitungen zu den stirnseitigen Schoopschichten Metallplatten besitzt, die die Schoopschichten voll überdecken und durch eine dünne Isolierschicht von der Gehäusewand getrennt sind. Die Metallplatten können eine rechteckige Form mit der Seitenlänge des Wickeldurchmessers aufweisen und laschenartige Fortsätze besitzen, die zur elektrischen Verbindung mit äußeren Anschlußelementen dienen.

Gegenpolige Metallplatten sind vorzugsweise durch eine Kunststoffschraube klemmend am Wickel befestigt. Die Metallplatten können ferner, gegebenenfalls zusätzlich zur Verschraubung, mit den Schoopschichten durch Verlötung oder Verschweißung verbunden sein.

Die Vorteile eines Kondensators gemäß der Erfindung werden anhand der folgenden Ausführungsbeispiele näher erläutert.

In der dazugehörenden Zeichnung zeigen:

Fig. 1 das Teilschnittbild eines herkömmlichen Kondensators mit Temperaturverteilung und

Fig. 2 das Schnittbild eines Kondensators gemäß der Erfindung.

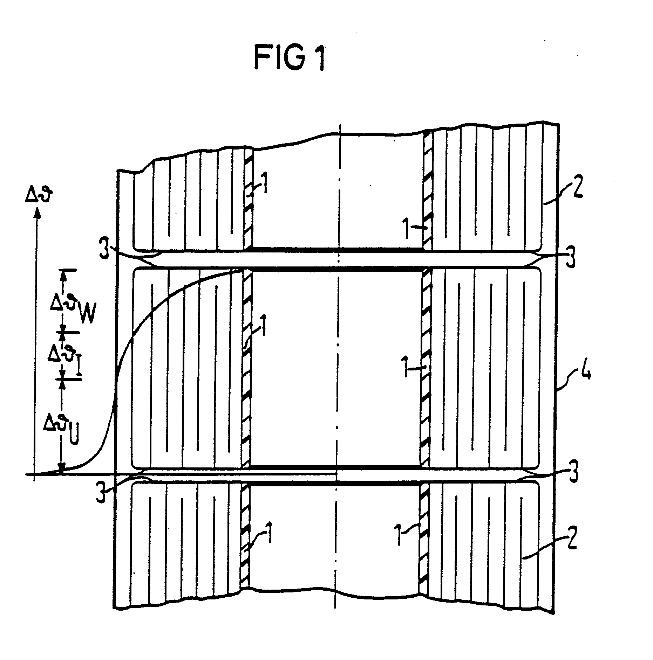

In der Fig. 1 ist ein Teilausschnitt eines herkömmlichen Kondensators dargestellt, der aus mehreren auf isolierenden Kernrohren 1 angeordneten Kondensatorwickeln 2 besteht. Die einzelnen Kondensatorwickel 2 weisen auf ihren Stirnseiten Schoopschichten 3 auf und sind in koaxialer Anordnung in ein zylindrisches Metallgehäuse 4 eingebaut. Die einzelnen Kondensatorwickel 2 sind in bekannter Weise miteinander verschaltet (in der Fig. 1 nicht dargestellt).

In der Fig. 1 ist die Temperaturverteilung $\Delta\vartheta$ im Kondensator im Prinzip dargestellt. Darin bedeuten $\Delta\vartheta$ die Temperaturdifferenz zwischen Umgebung und Bechergehäuse, $\Delta\vartheta_1$ die Temperaturdifferenz zwischen Bechergehäuse und aktiver Wickeloberfläche und $\Delta\vartheta_W$ die Temperaturdifferenz zwischen aktiver Wickeloberfläche und heißester Stelle im Wickel.

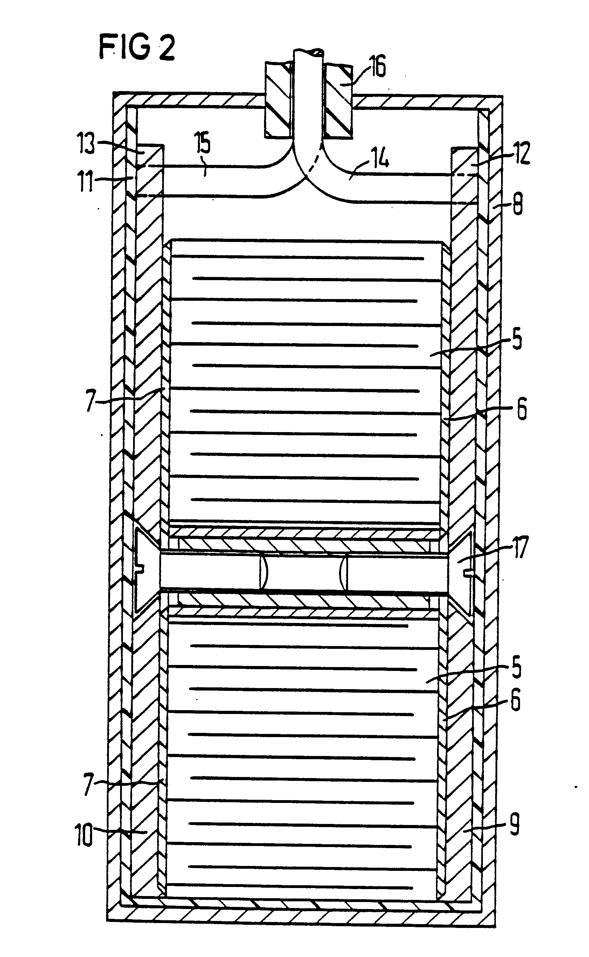

Fig. 2 zeigt in schematischer Darstellung das Schnittbild eines Kondensators, der aus zwei Einzelwickeln 5 aufgebaut ist. Die Kondensatorwickel 5 weisen auf ihren Stirnseiten gegenpolige Schoopschichten 6, 7 auf. Die Kondensatorwickel 5 besitzen eine möglichst flache, scheibenförmige Gestalt, wobei die Wickelbreite (Folienbreite) möglichst klein ist gegenüber dem Wickeldurchmesser. Dadurch entstehen in axialer Richtung des messer. Dadurch entstehen in axialer Richtung des Wärmeflusses geringe Weglängen, was eine gute Wärmeableitung aus dem Wickelinneren zu den Schoopschichten 6, 7 begünstigt. Dies wird darauf zurückgeführt, daß die Wärmeableitung von Wickeln in axialer Richtung erheblich höher als in radialer Richtung sind. Selbst wenn als Kondensatorelektroden regenerierfähig dünne Aluminiumschichten (20 bis 30 nm) verwendet werden, ist die Wärmeleitung des Aluminiums etwa tausendfach höher als in Papier oder Kunststoff. Somit ergibt sich ein wesentlicher Beitrag des Aluminiums zur Wärmeleitung. Wenn beispielsweise als Elektrodenträger 9μm Papierfolien verwendet werden, die im feldfreien Raum angeordnet sind und als Dielektrikumsfolie eine 8 μm Polypropylenfolie dient, ist die Wärmeleitung in axialer Richtung ca. 3 mal höher als in radialer Richtung.

Um zwischen den metallischen Schoopschichten 6, 7 und der Wand des Gehäuses 8 keinen unnötigen Wärmestau zu verursachen, ist das Gehäuse 8 als rechteckiges Flachgehäuse ausgebildet, wobei die Scheibenwickel 5 derart im Gehäuse 8 angeordnet sind, daß die flachen Seiten des Gehäuses 8 parallele Ebenen zu den beiden stirnseitigen Schoopflächen 6, 7 der Wickel 5 bilden. Dadurch ist eine großflächige Wärmeübergangszone von der Stirnfläche 6 bzw. 7 zum Gehäuse 8 vorhanden. Die Abmessungen des rechteckförmigen Gehäuses 8 ergeben sich in der einen Richtung aus der Länge des Wickels 5 (über die Schoopflächen 6,7 gemessen) und in der anderen Richtung aus dem Durchmesser des Wickels 5. Die Höhe des Gehäuses 8 bemißt sich aus der Anzahl der darin unterzubringenden Einzelwickel 5.

Als elektrische Zuleitungen zu den stirnseitigen Schoopschichten 6, 7 dienen Metallplatten 9,10, die die Schoopschichten 6, 7 voll überdecken. Die Metallplatten 9,10 bestehen beispielsweise aus Kupfer oder Aluminium.

Zwischen den Metallplatten 9, 10 und der Wand des Gehäuses 8 ist eine möglichst dünne elektrisch isolierende Schicht 11 angeordnet, deren Dicke nur durch die Notwendigkeit der erforderlichen Spannungsfestigkeit dimensioniert ist. Durch Mehrlagenisolation aus Kunststofffolien (z.B. 0,1 mm) lassen sich sehr dünne (z.B. 1 mm) und sehr spannungsfeste Isolierungen aufbauen. Die Dicke der Isolierschicht 11 kann auch aus dem Grunde niedrig gehalten werden, da zwischen den Metallplatten 9, 10 und den Schoppschichten 6, 7 außer an den Metallkanten der Schoopschichten 6, 7 ein homogenes elektrisches Feld vorhanden ist. Spitzen und Kanten üblicher Anschlußelemente (z.B. Litzen) werden deshalb vermieden.

Weiter würde sich bei der üblichen Kontaktierung geschoopter Stirnseiten durch litzenförmige Bänder ein durch die Dicke der Litze gegebener Abstand zwischen Schoopschicht und Gehäusewand ergeben, der mit Kunststoff oder Öl gefüllt und somit einen erheblichen Wärmewiderstand darstellen würde. Zusätzlich würde eine Anpassung der Becheroberfläche an die Schoopschicht mit aufgelöteter Litze komplizierte Formteile für die Außenwand erfordern.

Demgegenüber bilden die Metallplatten 9, 10 wärmetechnisch praktisch keinen Widerstand, da sie einen sehr günstigen Geometriefaktor (Fläche sehr groß gegenüber Dicke) besitzen.

Die Kontaktierung der Metallplatten 9, 10 ist zugleich auch von der Konstruktion her sehr einfach. Die Platten 9, 10 können durch laschenartige Fortsätze 12, 13 mit metallischen äußeren Anschlußelementen 14, 15 elektrisch verbunden werden. Die Anschlußelemente 14, 15 sind durch eine Isolierung 16 gegenüber dem Metallgehäuse 8 isoliert.

Die beiden Metallplatten 9, 10 sind durch eine Verschraubung mittels einer Kunststoffschraube 17 mit den Schoopschichten 6, 7 verklemmt. Beim Kondensator aufbau aus zwei Wickeln, wie er in der Fig. 2 dargestellt ist, ist die Kunststoffschraube 17 im Zwischenraum zwischen den Wickeln angeordnet. Bei einem Kondensatoraufbau mit einem einzigen Wickel wird die Kunststoffschraube dagegen durch das Kernloch des Wickels geführt.

Die Metallplatten 9, 10 können, gegebenenfalls zusätzlich zur Verschraubung, mit den Schoopschichten 6, 7 auch verlötet oder verschweißt sein.

Die Kontaktierung der Schoopschichten 6, 7 mit Metallplatten 9, 10 weist einen sehr geringen Vorwiderstand auf, der für die Einsätze bei hohen Frequenzen eine Voraussetzung ist. Vorteilhafterweise weisen die Metallplatten 9, 10 eine rechteckige Form mit der Seitenlänge des Wickeldurchmessers auf. Auf diese Weise werden die gut leitenden Metallplatten 9, 10 an den überstehenden Ecken und dem Wickelkern für eine erhöhte Wärmeabgabe an die Außenflächen des Gehäuses 8 und das gegebenenfalls im Gehäuse befindliche Öl ausgenutzt.

Bei den eingangs genannten Einsätzen handelt es sich fast durchweg um Einsatzspannungen > 1000 V, so daß Reihenschaltungen von Wickeln notwendig sind. Diese Reihenschaltung kann in Kombination aus der bekannten inneren Reihenschaltung und Scheibenwickelaufbau erfolgen. Auf diese Weise können für die meisten Einsätze Kondensatoren verwendet werden, die nur aus einem einzigen Scheibenwickel bestehen, wobei die erforderliche Spannungsfestigkeit durch eine entsprechende Anzahl innerer Reihenschaltungen erreicht und die Kapazität durch einen entsprechend großen Scheibendurchmesser erzielt wird. Daraus resultieren sehr einfache und kostengünstige Verdrahtungen für die Stromzuführungen über die beiden Anschlußplatten 9, 10.

Zur Demonstration des vorteilhaften Aufbaus eines erfindungsgemäßen Kondensators wird im folgenden ein Ausführungsbeispiel für einen elektrischen Einsatzfall beschrieben. Dabei soll ein Kondensator für eine Spannung von 3200 V, einer Umladefrequenz von 1800 Hz und einer Widerholfrequenz von 400 Hz aufgebaut werden. Im Falle des üblichen Aufbaus, bei dem die Wickel koaxial aufeinandergestellt werden und in einem zylinderförmigen Becher eingebaut sind, benötigt man 5 Wickel mit einem Gesamtvolumen von 5 mal 845 cm³ = 4245 cm³. Im Fall eines erfindungsgemäßen Aufbaus mit scheibenförmigen Wickeln benötigt man nur einen einzigen Wickel mit dem gleichen Gesamtvolumen. Die Temperaturdifferenz vom Bechergehäuse zur heißesten Stelle im Wickel beträgt beim Scheibenkondensator gemäß der Erfindung weniger als die Hälfte als beim Aufbau in radialer Anordnung im Rundbecher. Bei dieser Betrachtung wurden bei beiden Wickelarten der gleiche Folienaufbau mit gleicher Verlustwärmeerzeugung im Wickel vorausgesetzt. Die unterschiedlichen Temperaturergebnisse ergeben sich allein aus den konstruktiven Verbesserungen zur Wärmeableitung beim Scheibenkondensator gemäß der Erfindung.

Wie bereits vorstehend erwähnt, können die Elektroden aus regenerierfähig dünnen Metallschichten, z.B. Aluminium, bestehen, es können als Elektroden aber auch selbsttragende Metallfolien verwendet werden, wobei zum Erhalt der Selbstheilfähigkeit beispielsweise auch ein Aufbau möglich ist, bei dem eine Elektrode durch selbsttragende Metallfolien und die andere durch regenerierfähig dünne Metallschichten gebildet wird.

Die regenerierfähig dünnen Metallschichten können auf einem gesonderten Elektrodenträgermaterial, beispielsweise Papier, angeordnet sein, wobei auf beiden Oberflächen Metallschichten abgeschieden werden, die über die Schoopschichten elektrisch leitend miteinander verbunden werden. Dadurch kommt das Material des Elektrodenträgers in einen feldfreien Raum, wodurch sich besonders niedrige Verlustleistungen ergeben. Als Dielektrikum werden bei diesem Aufbau unbedampfte Kunststoffolien, beispielsweise aus Polypropylen oder Polykarbonat, verwendet.

Andererseits können die regenerierfähig dünnen Metallschichten aber auch direkt auf den Dielektrikumsfolien abgeschieden werden.

Die genannten Kondensatoraufbauten können trocken oder auch mit einem Isolieröl imprägniert sein, wobei die imprägnierten Ausführungen einen besseren Wärmeübergang zwischen Wickel und Gehäuse ermöglichen.

## Ansprüche

1. Elektrischer Wickelkondensator, der gegebenenfalls aus mehreren miteinander verschalteten Einzelwickeln besteht, wobei die Elektroden zu entgegengesetzen Stirnseiten führt und dort mit Schoopschichten kontaktiert sind, und der in ein metallisches Gehäuse eingebaut ist, **dadurch gekennzeichnet**, daß der Kondensator in ein rechteckförmiges Flachgehäuse (8) eingebaut ist, und daß die flachen Seiten des Gehäuses (8) parallele Ebenen zu den stirnseitigen Schoopflächen (6, 7) bilden.

2. Elektrischer Wickelkondensator nach Anspruch 1, **dadurch gekennzeichnet**, daß die Breite eines Kondensatorwickels (5) kleiner als der Wickeldurchmesser ist.

3. Elektrischer Wickelkondensator nach Anspruch 1 oder 2, **dadurch gekennzeichnet**, daß er als elektrische Zuleitungen zu den stirnseitigen Schoopschichten (6, 7) Metallplatten (9, 10) besitzt, die die Schoopschichten (6, 7) voll überdecken und durch eine Isolierschicht (11) von der Gehäusewand getrennt sind.

4. Elektrischer Wickelkondensator nach Anspruch 3, **dadurch gekennzeichnet**, daß die Metallplatten (9, 10) eine rechteckige Form mit der Seitenlänge des Wickeldurchmesser aufweisen.

5. Elektrischer Wickelkondensator nach Anspruch 3 oder 4, **dadurch gekennzeichnet**, daß die Metallplatten (9, 10) laschenartige Fortsätze (12, 13) zur elektrischen Verbindung mit äußeren Anschlußelementen (14, 15) aufweisen.

6. Elektrischer Wickelkondensator nach einem der Ansprüche 3 bis 5, **dadurch gekennzeichnet**, daß die beiden gegenpoligen Metallplatten (9, 10) durch eine Kunststoffschraube (17) klemmend am Wickel befestigt sind.

7. Elektrischer Wickelkondensator nach einem der Ansprüche 3, bis 6 **dadurch gekennzeichnet**, daß die Metallplatten (9, 10) mit den Schoopschichten (6, 7) durch Verlötung oder Verschweißung verbunden sind.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | BE-A- 717 152 (SIEMENS AG) <br> * Anspruch 1; Seite 3, Absatz 3 - Seite 4, Absatz 4; Figuren 1,2 * | 1 | H 01 G 1/08 <br> H 01 G 1/02 <br> H 01 G 4/38 |
| A | | 3,4,7 | |
| Y | DE-A-3 130 837 (E. ROEDERSTEIN SPEZIALFABRIK FÜR KONDENSATOREN GmbH) <br> * Ansprüche 1,2,8,9; Seite 7, Absätze 2-5; Absatz 7 - Seite 8, Absatz 1; Figur 1 * | 1 | |
| A | | 2 | |
| A | US-A-2 127 352 (W. DUBILIER) <br> * Ansprüche 1,2; Seite 1, rechte Spalte, Zeile 5 - Seite 2, linke Spalte, Zeile 35; Figur 1 * | 1,3,4 | RECHERCHIERTE SACHGEBIETE (Int. Cl.4) |
| A | EP-A-0 110 768 (L.C.C.-C.I.C.E. - COMPAGNIE EUROPEENNE DE COMPOSANTS ELECTRONIQUES) <br> * Anspruch 1; Seite 5, Zeilen 4-11; Figur 3 * | 1-4,7 | H 01 G |
| A | EP-A-0 033 697 (I.C.C.-C.I.C.E. - COMPAGNIE EUROPEENNE DE COMPOSANTS ELECTRONIQUES) <br> ---   -/- | | |

Der vorliegende Recherchenbericht wurde für alle Patentansprüche erstellt.

| Recherchenort | Abschlußdatum der Recherche | Prüfer |
|---|---|---|
| DEN HAAG | 17-01-1986 | DECANNIERE L.J. |

## Europäisches Patentamt
## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-3 085 181 (A. LAFOSSE et al.)  ----- | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 17-01-1986 | DECANNIERE L.J. |